# EUROPÄISCHE PATENTSCHRIFT

(11) **EP 2 906 824 B1**
(45) Veröffentlichungstag und Bekanntmachung des Hinweises auf die Patenterteilung: **09.11.2022**
(21) Anmeldenummer: 13770459.9
(22) Anmeldetag: 26.09.2013
(51) Int. Cl.: F03D 7/02, F03D 7/04, F03D 9/25

(54) **VERFAHREN ZUM BETREIBEN EINER WINDENERGIEANLAGE**
METHOD FOR OPERATING A WIND TURBINE
PROCÉDÉ POUR FAIRE FONCTIONNER UNE ÉOLIENNE

(30) Priorität: 10.10.2012 DE 102012218484
(43) Veröffentlichungstag der Anmeldung: 19.08.2015
(73) Patentinhaber: Wobben Properties GmbH, 26607 Aurich (DE)
(72) Erfinder: DE BOER, Wolfgang, 26802 Moormerland (DE)
(74) Vertreter: Eisenführ Speiser
(86) Internationale Anmeldenummer: PCT/EP2013/070030
(87) Internationale Veröffentlichungsnummer: WO 2014/056725

(56) Entgegenhaltungen:
- EP-A1- 1 719 910
- WO-A2-2007/089136
- WO-A2-2010/084131
- US-A1- 2010 119 369
- US-A1- 2011 204 636

## Beschreibung

Die vorliegende Erfindung betrifft ein Verfahren zum Betreiben wenigstens einer Windenergieanlage. Weiterhin betrifft die vorliegende Erfindung eine Windenergieanlage und sie betrifft einen Windpark. Außerdem betrifft sie ein Verfahren zum Betreiben eines Windparks.

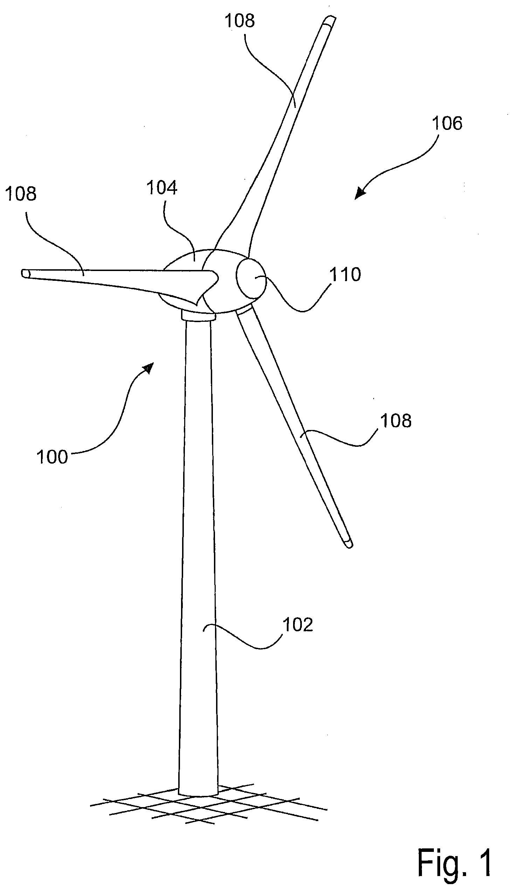

Windenergieanlagen sind allgemein bekannt, sie wandeln insbesondere mittels eines Rotors, der um eine im Wesentlichen horizontal angeordnete Achse rotiert, mechanische Energie aus Wind in elektrische Energie um, wobei weiterhin ein elektrischer Generator verwendet wird. Ein Beispiel einer solchen Windenergieanlage ist schematisch in Fig. 1 dargestellt.

Bei einer solchen Windenergieanlage kann es vorkommen, dass diese in Schwingungen gerät, die sich bis auf den Turm auswirken, der den aerodynamischen Rotor der Windenergieanlage trägt. Hierbei wird grundsätzlich zwischen zwei Schwingungen unterschieden, nämlich zwischen einer Längsschwingung und einer Querschwingung, die sich grundsätzlich auch überlagern könnten.

Eine Querschwingung ist eine, die im Wesentlichen quer zur Ausrichtung der Rotorachse auftritt. Eine solche Querschwingung ist häufig durch Unwuchten des Rotors bedingt und schwingt entsprechend korrespondierend mit der Drehzahl des Rotors. Da diese Unwucht bei der Drehung diese Schwingung unmittelbar auslöst, kann hier auch von einer erzwungenen Schwingung gesprochen werden.

Eine Längsschwingung tritt im Wesentlichen in Längsrichtung der Drehachse des Rotors auf. Die Windenergieanlage schwingt dann also quasi vor und zurück. Solche Längsschwingungen werden meist durch den Wind erzeugt und wirken regelmäßig mit Eigenschaften der Windenergieanlage zusammen. Insbesondere richtet sich die Schwingfrequenz einer solchen Längsschwingung regelmäßig nach einer Eigenfrequenz oder einer Resonanzfrequenz - die meist sehr ähnlich sind - oder einem Vielfachen davon. Insbesondere dann, wenn der Wind selbst unstetig ist, kann er eine solche Längsschwingung anregen. Eine Längsschwingung kann auch dadurch auftreten oder verstärkt werden, dass die Windenergieanlage regelungstechnisch auf eine Windzunahme reagiert, einschließlich auf eine Böe, dadurch auf die Bewegung der Windenergieanlage Einfluss nimmt, wobei die Reaktion der Windenergieanlage auf diesen Regelungseingriff erneut eine weitere Änderung herbeiführt, was im schlimmsten Fall zu einem Aufschwingen führen kann.

Ein möglicher Regelungseingriff, der eine solche Schwingung auslösen oder verstärken könnte, ist eine so genannte Pitchregelung, bei der der Anstellwinkel der Rotorblätter durch einen entsprechenden Verstellantrieb verändert wird. Hier kann beispielsweise ein erhöhter Winddruck durch ein entsprechendes Verstellen der Rotorblätter reduziert werden, wodurch wiederum der Winddruck zu schwach werden könnte, so dass die Rotorblätter wieder zurückgestellt werden, bis sich möglicherweise wieder ein zu hoher Winddruck einstellt, so dass die Pitchregelung abermals reagiert und hierdurch ein Schwingverhalten entstehen könnte.

Regelungstechnisch könnte ein solches Problem natürlich berücksichtigt werden, indem beispielsweise eine entsprechende Dämpfung eingestellt wird oder komplexere Regler eingesetzt werden, die beispielsweise einen Störgrößenbeobachter beinhalten, um die Störgröße besser berücksichtigen zu können. Problematisch hierbei ist jedoch, dass eine solche Veränderung der Regelungsstruktur regelmäßig unabsehbare Konsequenzen haben kann. Es kommt hinzu, dass jede Windenergieanlage individuell ist und individuell reagiert. Das liegt nicht zuletzt natürlich auch daran, dass jede Windenergieanlage an unterschiedlichen Orten aufgestellt wird und entsprechend nie identische Bedingungen vorliegen.

Ein weiteres Problem, das der vorliegenden Erfindung auch zugrunde liegt und möglicherweise im Stand der Technik noch nicht erkannt wurde, kann bei mehreren sich gegenseitig beeinflussenden Windenergieanlagen auftreten. Insbesondere wird hierbei ein Phänomen betrachtet, bei dem eine erste Windenergieanlage in einem bestimmten Betriebszustand, insbesondere bei einer bestimmten Windrichtung im Windschatten hinter einer zweiten Windenergieanlage steht. Zusätzlich zu bekannten Energiedefiziten, bei der im Windschatten stehenden Windenenergieanlage, können auch Schwingungen von der vorderen, also zweiten Windenergieanlage auf die hintere, also erste Windenergieanlage übertragen werden bzw. bei der hinteren Windenergieanlage erst ausgelöst werden.

Problematisch bei solchen Einflüssen ist insbesondere, dass diese selten auftreten und daher schwierig bis gar nicht zu untersuchen sind. Schließlich kann ein solches beschriebenes Phänomen nur auftreten, wenn die Windrichtung so steht, dass die erste Windenergieanlage hinter der zweiten Windenergieanlage angeordnet ist. Aber auch dann treten solche Einflüsse nicht grundsätzlich auf, sondern sind vielmehr von weiteren Bedingungen abhängig wie beispielsweise der vorherrschenden Windgeschwindigkeit oder vielleicht der Böigkeit des vorherrschenden Windes.

Das deutsche Patent- und Markenamt hat in der Prioritätsanmeldung folgenden Stand der Technik recherchiert: DE 10 2006 001 613 A1, DE 10 2008 009 740 A1, DE 10 2009 039 340 A1, DE 699 01 876 T2, US 2009/0200804 A1, WO 2007/089136 A2 und WO 2012/125842 A2.

Die WO 2007/089136 A2 offenbart ein Verfahren zum Betreiben einer Windenergieanlage. Das Verfahren sieht vor, den Pitchwinkel zu verändern, wenn eine Auslenkung oder Schwingung des Turmes der Windenergieanlage einen vorbestimmten Grenzwert überschreitet.

Die WO 2010/084131 A2 betrifft ein Verfahren zur Steuerung eines Rotors einer Windenergieanlage während der Rotor, zum Beispiel für Wartungszwecke, angehalten wird. Dabei können Schwingungen des Turmes auftreten, die durch an den Rotorblättern angeordnete Klappen gedämpft werden, die ausfahrbar sind.

Die EP 1 719 910 A1 beschreibt ebenfalls ein Verfahren, um Schwingungen eines Turmes einer Windenergieanlage aktiv zu dämpfen, indem der Pitchwinkel der Rotorblätter verstellt wird.

Die US 2010/119369 A1 schlägt auch ein Verfahren zur Steuerung eines Rotors einer Windenergieanlage vor, indem durch schnelle Verstellung des Pitchwinkels der Rotorblätter verhindert wird, dass sich eine Pendelbewegung des Turmes der Windenergieanlage aufschaukelt.

Die US 2011/204636 A1 offenbart ein Verfahren zum Betreiben einer Offshore-Windenergieanlage. Verfahrensgemäß ist vorgesehen, dass die von dem Wasser verursachten periodischen Schwingungen des Turmes der Windenergieanlage durch das Verstellen des Pitchwinkels der Rotorblätter reduziert werden.

Der Erfindung liegt somit die Aufgabe zugrunde, wenigstens eines der oben genannten Probleme zu adressieren. Insbesondere soll eine Lösung vorgeschlagen werden, die auf möglichst einfache und unkomplizierte Art und Weise und möglichst ohne Beeinflussung bestehender Regler den beschriebenen Längsschwingungen entgegenwirkt. Zumindest soll eine alternative Lösung vorgeschlagen werden.

Erfindungsgemäß wird ein Verfahren nach Anspruch 1 vorgeschlagen. Ein solches Verfahren betrifft zumindest das Betreiben wenigstens einer ersten Windenergieanlage. Die Berücksichtigung einer zweiten Windenergieanlage oder noch weiterer Windenergieanlagen kann sinnvoll sein, muss aber, auch je nach konkret auftretender Schwingung, nicht unbedingt von einer zweiten Windenergieanlage abhängen. Letztlich kann das Verfahren wenigstens gemäß einer Ausführungsform auch an einer einzelnen Windenergieanlage implementiert werden, selbst wenn die adressierten Probleme möglicherweise durch eine weitere Windenergieanlage erst erzeugt oder verstärkt werden. Vorzugsweise kommt das vorgeschlagene Verfahren ohne eine Feststellung der konkreten Ursache für die Schwingungen aus, die es zu beheben gilt.

Das erfindungsgemäße Verfahren erfasst somit zunächst eine Turmschwingung. Sofern diese Turmschwingung eine Längsschwingung ist oder eine Längsschwingung enthält, wird eine Maßnahme zur Schwingungsreduzierung eingeleitet, wenn die Amplitude der Längsschwingung einen vorbestimmten Grenzwert überschreitet. Gemäß einer Möglichkeit wird lediglich eine Amplitude einer Längsschwingung untersucht und entsprechend eine Maßnahme eingeleitet. Hierbei kann unberücksichtigt bleiben, ob dieser Längsschwingung mit der erfassten Längsschwingungsamplitude noch eine Querschwingung überlagert ist oder nicht. Ergänzend oder alternativ kann aber die Querschwingung auch berücksichtigt werden, was ggf. Einfluss auf den auslösenden Grenzwert hat. Der Grenzwert wird vorzugsweise so festgelegt, dass die Windenergieanlage durch eine Schwingung nicht überlastet wird.

Als Maßnahme zur Schwingungsreduzierung werden nun mehrere Varianten vorgeschlagen, die grundsätzlich auch kombiniert werden können. Die Maßnahme zur Schwingungsreduzierung kann auch vereinfacht nur als Schwingungsreduzierung bezeichnet werden. Entscheidend für die entsprechenden Maßnahmen ist, dass diese eingeleitet werden. Eine Überprüfung, ob und inwieweit tatsächlich eine Schwingungsreduzierung dann erreicht wurde, kann im Einzelnen konkret vor Ort beim Betreiben der Windenergieanlage unterbleiben. Insoweit betreffen die Maßnahmen vorzugsweise, wenn auch nicht ausschließlich, Steuerungsmaßnahmen.

Gemäß der Erfindung wird vorgeschlagen, zwei Windenergieanlagen, die sich gegenseitig beeinflussen, nämlich über den Wind, aufeinander abzustimmen. Hierbei wird vorgeschlagen, dass die Drehzahl der ersten Windenergieanlage, nämlich diejenige, die im Windschatten der zweiten Windenergieanlage steht, auf die Drehzahl der zweiten Windenergieanlage abgestimmt wird. Insbesondere so, dass die Drehzahl der ersten Windenergieanlage wenigstens um eine vorbestimmte Differenzdrehzahl von der Drehzahl der zweiten Windenergieanlage abweicht. Die Drehzahl der zweiten Windenergieanlage liegt dabei wenigstens 0,2 U/min über oder unter der Drehzahl der zweiten Windenergieanlage. Vorzugsweise liegt sie um wenigstens 0,5 U/min über oder unter der Drehzahl der zweiten Windenergieanlage. Hierdurch wird insbesondere eine Desynchronisation beider Windenergieanlagen vorgenommen. Die beiden Rotoren der ersten und zweiten Windenergieanlage drehen dann wenigstens mit leicht unterschiedlicher Drehzahl und können dadurch ein Aufschwingen der ersten Windenergieanlage bedingt oder unterstützt durch die zweite, nämlich vordere Windenergieanlage, vermeiden oder unterbrechen.

Bei dieser Maßnahme der konkreten Abstimmung der beiden Drehzahlen aufeinander können zwar zwei im Grunde baugleiche Windenergieanlagen vorliegen, es kann aber auch eine solche Desynchronisierung für unterschiedliche Windenergieanlagen vorgeschlagen werden. Häufiger wird so eine Maßnahme jedoch bei zwei gleichen Windenergieanlagen zu erwarten sein, weil unterschiedliche Windenergieanlagen meist systembedingt auch unterschiedliche Drehzahlen aufweisen.

Entsprechend wird jedenfalls für diese Maßnahme, vorzugsweise aber auch für die anderen Maßnahmen, vorgeschlagen, eine drehzahlvariable Windenergieanlage zu verwenden. Eine solche drehzahlvariable Windenergieanlage kann insbesondere einen Synchrongenerator verwenden, der einen Wechselstrom erzeugt, der gleichgerichtet und dann mit einem Wechselrichter ins Netz eingespeist wird. Mit anderen Worten ist die Verwendung einer drehzahlvariablen Windenergieanlage mit einem sogenannten Vollumrichterkonzept eine vorteilhafte Ausführungsform.

Vorzugsweise wird bei Verwendung der Maßnahme zur Schwingungsreduzierung, die ein Umschalten der Betriebsmodi, nämlich ein Umschalten zwischen zwei Leistungskennlinien, vorschlägt, dafür gesorgt, dass eine benachbarte Windenergieanlage, insbesondere dann, wenn sie baugleich ist, nicht in ihrer Leistungskennlinie umgeschaltet wird. Somit wird gezielt vermieden, dass bei zwei sich beeinflussenden Windenergieanlagen die vorgeschlagene Maßnahme zur Reduzierung der Längsschwingung bei beiden gleich durchgeführt wird, mit dem Ergebnis, dass die Maßnahme zur Schwingungsreduzierung nicht oder nicht ausreichend wirksam ist. Vorzugsweise wird so vorgegangen, dass die hintere, also erste Windenergieanlage mit einer geringeren, insbesondere reduzierten Drehzahl läuft. Insoweit würde hier auch diejenige Windenergieanlage in ihrer Leistungskennlinie verändert werden bzw. in ihrer Drehzahl verändert werden, die auch die problematischen Längsschwingungen aufweist.

Gemäß einer weiteren Ausführung wird als Maßnahme zur Schwingungsreduzierung vorgeschlagen, den aktuellen Pitchwinkel auf den aktuellen Wert für einen vorbestimmten Einfrierzeitraum einzufrieren. Dies setzt entsprechend voraus, dass eine pitchgeregelte Windenergieanlage vorliegt. Eine solche ist mit einem Regelungsalgorithmus versehen, der den Pitchwinkel abhängig von ganz unterschiedlichen Vorgaben einstellt. Dieser Regelungsalgorithmus läuft im Grunde beim Betrieb der Windenergieanlage ständig mit und kann zu einer ständigen Nachführung des Pitchwinkels führen, was auch gewünscht sein kann. Beispielsweise gibt der reine Regelungsalgorithmus ständig einen Pitchsollwert vor, der von einem oder mehreren Pitchantrieben für jedes einzelne Rotorblatt oder ggf. für alle umgesetzt wird. Insbesondere dieser Sollwert wird beim Einfrieren des aktuellen Pitchwinkels auf einen festen Wert gesetzt. Der Regelalgorithmus für das Pitchen läuft dabei unverändert weiter und rechnet ggf. ständig einen neuen Pitchwinkelsollwert aus. Dieser von dem Regelalgorithmus nun innerhalb dieses Einfrierzeitraums neu berechnete Pitchsollwert wird aber nicht weitergegeben. Natürlich kann die interne Realisierung auch anders vorgenommen werden.

Jedenfalls wird erreicht, dass eine Pitchbewegung kurzfristig angehalten wird. Dadurch kann ein etwaiger Aufschwingrhythmus, der sich eingestellt hat, unterbrochen werden.

Meist reicht eine solche kurze Unterbrechung aus und der Regelalgorithmus für den Pitchwinkel kann danach normal weiter betrieben werden. Das Aufschwingen wird dadurch beendet und der Pitchregelalgorithmus als solcher - und auch andere Regelalgorithmen in der Anlage - brauchte nicht geändert oder angepasst zu werden. Insbesondere wird dadurch auch nicht nachhaltig in die Stabilität des Gesamtregelungskonzeptes eingegriffen.

Dieser vorgeschlagenen Maßnahme liegt auch die Erkenntnis zugrunde, dass solche Längsschwingungen vergleichsweise selten auftreten und zu ihrem Auftreten meist sehr viele Umstände zugleich eintreten müssen, zumindest ist davon auszugehen. Nach Ablauf des vorbestimmten Einfrierzeitraums liegt dann schon keine Situation mehr vor, bei der ein solches Aufschwingen einer Längsschwingung auftritt oder angeregt wird. Diese Maßnahme des kurzzeitigen Einfrierens kann dann meist eine einmalige Maßnahme bleiben und muss möglicherweise in der nächsten Zeit nicht wiederholt werden. Möglicherweise stellt es sogar ein einmaliges Vorgehen in der Laufzeit der Windenergieanlage dar.

Der Einfrierzeitraum kann vergleichsweise kurz gewählt werden und liegt vorzugsweise im Bereich von 5 s bis 1 min, insbesondere im Bereich von 10 bis 20 s. Diese Maßnahme zur Schwingungsreduzierung durch Einfrieren des Pitchwinkels zielt darauf ab, dass Aufschwingen einmal zu unterbrechen und dadurch eine neue Voraussetzung zu schaffen, bei der sich die Längsschwingung regelmäßig nicht mehr aufschwingt und damit auch nicht mehr den vorbestimmten Grenzwert überschreitet.

Im Übrigen kann der vorbestimmte Grenzwert eine Wegamplitude des Schwingweges des Turms beispielsweise im Bereich des Turmkopfes betragen, oder auch eine maximale Beschleunigung.

Außerdem wird vorgeschlagen, den verwendeten Pitchregelalgorithmus zu wechseln. Insbesondere erfolgt die Pitchregelung grundsätzlich mit einem Basispitchregelalgorithmus oder Standardpitchregelalgorithmus. Nur wenn die Längsschwingung auftritt und die Amplitude den vorbestimmten Grenzwert überschreitet, wird der Pitchregelalgorithmus gewechselt. Hierzu kann ein zweiter alternativer Pitchregelalgorithmus hinterlegt sein oder es wird lediglich ein Zeitparameter in dem Regelalgorithmus verändert. In beiden Fällen kann der Wechsel des Pitchregelalgorithmus so erfolgen, dass die Regelgeschwindigkeit reduziert wird. Beispielsweise kann eine Regelzeitkonstante um 10% oder um 20% erhöht werden. Wenn die Amplitude der Längsschwingung sich dann beruhigt hat und/oder nach Ablauf einer vorbestimmten Zeit wird dann wieder auf den ursprünglichen Pitchregelalgorithmus zurückgewechselt.

Ergänzend wird vorgeschlagen, die Azimutposition um einen vorbestimmten Azimutwinkel zu verstellen. Eine solche Maßnahme zur Schwingungsreduzierung wird insbesondere, aber nicht ausschließlich, für eine Windenergieanlage in einem Windpark vorgeschlagen. Hier kann eine, auf den Wind bezogen, vor der ersten Windenergieanlage stehende zweite Windenergieanlage den Wind so beeinflussen, dass er bei der dahinter stehenden ersten Windenergieanlage zu Schwingungen führt. Durch ein leichtes Verstellen des Azimutwinkels, also der Richtung der Rotorachse, kann der Einfluss einer solchen vor der ersten Windenergieanlage stehenden zweiten Windenergieanlage zumindest geändert werden.

Auch bei einer einzelnen Windenergieanlage kann das Verändern der Azimutposition um einen geringen Wert eine aufgetretene hohe Längsschwingung wieder reduzieren, weil beispielsweise bestimmte Hindernisse im Bereich der Windenergieanlage, die auch einige hundert Meter entfernt stehen können, eine bestimmte ungünstige Anströmung des Windes hervorrufen, die bereits durch eine minimale Azimutverstellung entschärft wird.

Vorzugsweise wird der Azimutwinkel im Bereich von 2 bis 8°, insbesondere im Bereich von 4 bis 5° verstellt. Durch einen solchen kleinen Wert kann bereits eine solche Schwingung verhindert werden und gleichzeitig ist eine etwaige resultierende Ertragseinbuße durch den nicht mehr ganz optimal eingestellten Azimutwinkel gering. Es kann davon ausgegangen werden, dass der reduzierte Ertrag aufgrund eines nicht optimalen Azimutwinkels um den Kosinus dieses vom optimalen Azimutwinkel abweichenden Azimutwinkels reduziert ist. Da sich der Kosinus im Bereich von 0, also auch noch bis 8° kaum verändert, ergibt sich auch kaum eine Ertragsreduzierung. Möglicherweise ist sie nicht einmal nachweisbar.

Der Azimutwinkel kann auf den optimalen Wert zurückgestellt werden, wenn sich die Längsschwingung beruhigt hat und signifikant mit ihrer Amplitude unter dem vorbestimmten Grenzwert liegt oder sie kann als zusätzliches oder alternatives Kriterium eine vorbestimmte Wartezeit von beispielsweise einer Minute oder fünf Minuten berücksichtigen, bis die Azimutposition wieder zurückgestellt wird. Ergänzend oder alternativ kann die Azimutposition auf den nominalen Wert eingestellt werden, wenn sich die Windrichtung gedreht hat, zumindest etwas gedreht hat. Dann nämlich ist zu erwarten, dass auch eine windrichtungsabhängige Schwingungsursache nicht mehr vorliegt und die Windenergieanlage kann hinsichtlich ihres Azimutwinkels wieder normal betrieben werden. Dieser neue nominale Azimutwinkel ist dann ohnehin nicht mehr der Azimutwinkel, aus dem heraus die Windenergieanlage zur Schwingungsreduzierung verstellt wurde. Eine solche Verstellung des Azimutwinkels wird insbesondere vorgeschlagen, wenn eine erste Windenergieanlage genau im Windschatten einer anderen steht.

Außerdem wird vorgeschlagen, dass der Betrieb der ersten Windenergieanlage von einem ersten auf einen zweiten Betriebsmodus umgestellt wird. Der erste Betriebsmodus basiert hierbei auf einer ersten Leistungskennlinie und der zweite Betriebsmodus entsprechend auf einer zweiten Leistungskennlinie. Die Leistungskennlinie gibt hierbei einen Zusammenhang zwischen Leistung und Drehzahl an und insbesondere wird die Leistung abhängig von der Drehzahl eingestellt. Leistung wird also solange auf den jeweils zutreffenden Wert der Kennlinie eingestellt, bis die Drehzahl ihren Wert dort hält. Eine solche Veränderung durch Umstellung des Betriebsmodus kann gering sein und verändert einen Parameter der Windenergieanlage aber so, dass die Ausgangsposition, die schließlich auch zu der Längsschwingung geführt haben muss, verändert wird. Nach Ablauf einer vorbestimmten Zeit kann wieder auf die erste, insbesondere die Standardleistungskennlinie, zurückgewechselt werden. Die Veränderung der Leistungskennlinie kann beispielsweise zu einer jedenfalls leichten Veränderung der Drehzahl zum vorherigen Wert führen. Das kann zum Unterbrechen der Längsschwingung ausreichen. Vorzugsweise erfolgt das Einfrieren des aktuellen Pitchwinkels und/oder das Wechseln des verwendeten Pitchregelalgorithmus im Volllastbetrieb. Der Volllastbetrieb beschreibt hierbei die Situation, bei der die vorherrschende Windgeschwindigkeit Nenngeschwindigkeit beträgt, die erzeugte Leistung Nennleistung beträgt und/oder die Drehzahl etwa Nenndrehzahl beträgt. In diesem Volllastbetrieb wird der Pitchwinkel regelmäßig verwendet, um die Drehzahl konstant zu halten. Weicht also die tatsächliche Drehzahl minimal von der Solldrehzahl, nämlich meist Nenndrehzahl, ab, wird versucht durch Verstellen des Pitchwinkels gegenzusteuern bzw. gegenzuregeln. Gerade hierdurch entstehende Längsschwingungen sollen durch Einfrieren des Pitchwinkels und/oder Wechseln des veränderten Pitchalgorithmus reduziert oder behoben werden und daher werden diese Maßnahmen im Vollastbetrieb vorgeschlagen.

Außerdem erfolgt die Maßnahme des Verstellens der Azimutposition, das Umschalten des Betriebs der ersten Windenergieanlage und/oder das Ändern der Drehzahl der ersten Windenergieanlage im Teillastbetrieb. Der Teillastbetrieb liegt vor, wenn die vorherrschende Windgeschwindigkeit unterhalb der Nennwindgeschwindigkeit liegt. In einem solchen Teillastbetrieb kann der Pitchwinkel auf einen konstanten Wert gesetzt werden. Das Einfrieren des Pitchwinkels bzw. das Wechseln eines Pitchalgorithmus, der hier nicht wirkt, ergibt daher weniger Sinn, wohingegen dann eine andere Drehzahl eingestellt werden kann und/oder eine andere Leistungskennlinie gewählt werden kann. In diesem Teillastbetrieb hängt die konkrete Drehzahl und auch die konkrete Leistung jeweils von dem vorherrschenden Wind ab und ändert sich mit ihm ständig. Diese ständige Drehzahl und/oder Leistungsänderung wird hierbei berücksichtigt und deshalb das Umschalten des Betriebs und/oder das Ändern der Drehzahl vorgeschlagen.

Das Verstellen der Azimutposition kann hier auch sinnvoll sein, zumal schwächere Winde vorliegen. Das Verstellen der Azimutposition kann aber auch im Volllastbetrieb erfolgen.

Vorzugsweise wird eine Verschiebung der Leistungskennlinie, insbesondere der zweiten Leistungskennlinie im Bereich eines Übergangs vom Teillastbereich zum Volllastbereich vorgeschlagen. Somit kann auch gerade im Übergangsbereich, wenn einige der vorgeschlagenen Maßnahmen nicht oder schlecht wirken, durch diese Verschiebung der Kennlinie in diesem Bereich eine verbesserte oder zusätzliche Möglichkeit des Eingriffs geschaffen werden.

Weiterhin wird ein Windpark mit wenigstens einer ersten Windenergieanlage und einer zweiten Windenergieanlage zum Erzeugen elektrischer Energie aus Wind vorgeschlagen, wobei die erste Windenergieanlage mit einem Verfahren gemäß wenigstens einem der vorgenannten Ausführungsformen betrieben wird.

Vorzugsweise weist eine solche Windenergieanlage einen Synchrongenerator auf, der mit einem Gleichstrom erregt wird und der zur Schwingungsreduzierung um einen vorbestimmten Wert, nämlich einen vorbestimmten Erregerstromwert, verändert wird. Durch die Veränderung des Erregerstroms und damit der Erregung des Synchrongenerators kann dieser bei gleicher Drehzahl entsprechend mehr oder weniger Leistung erzeugen. Damit geht aber auch eine Erhöhung eines Drehmomentes einher, das der Drehung des Rotors entgegenwirkt. Dadurch kann die Drehzahl des Rotors verringert werden bzw. bei Verringerung der Erregung die Drehzahl erhöht werden. Dieser Eingriff über die Erregung ist eine vorteilhafte Ausgestaltung, die mit anderen Anlagentypen so nicht oder nicht so gut umgesetzt werden kann. Somit wird vorzugsweise eine solche Windenergieanlage mit Synchrongenerator mit Gleichstromerregung vorgeschlagen.

Nachfolgend wird die Erfindung anhand von Ausführungsformen unter Bezugnahme auf die begleitenden Figuren exemplarisch näher erläutert.
- Fig. 1: zeigt eine Windenergieanlage in einer perspektivischen Ansicht.
- Fig. 2: zeigt ein vereinfachtes Ablaufdiagramm zum Erläutern der erfindungsgemäßen Schwingungsreduzierung.
- Fig. 3: zeigt schematisch zwei Windenergieanlagen in einer Draufsicht zur Veranschaulichung einer Beeinflussung.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

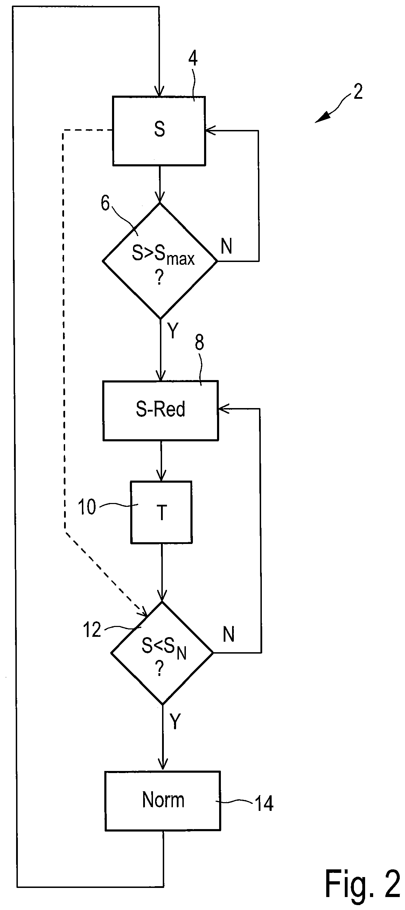

Fig. 2 zeigt ein vereinfachtes Ablaufdiagramm 2, das mit einem Messblock 4 startet. In dem Messblock 4 wird eine Längsschwingung erfasst, beispielsweise aus einer Beschleunigungsamplitude, die mit entsprechenden Beschleunigungssensoren am Turmkopf gemessen werden kann. Die erfasste Längsschwingung wird in dem Messblock 4 mit dem Buchstaben S gekennzeichnet.

Dieser erfasste Wert für S wird kontinuierlich in dem ersten Prüfblock 6, der auch als Überschreitungsprüfblock 6 bezeichnet werden kann, mit einem vorbestimmten Grenzwert, der hier als Sₘₐₓ bezeichnet wird, verglichen. Eine etwaige Erfassung einer Querschwingung bleibt in der in Fig. 2 gezeigten Ausführung unberücksichtigt.

Wird in dem ersten Prüfblock 6 festgestellt, dass die erfasst Längsschwingung S nicht größer als der vorbestimmte Grenzwert Sₘₐₓ ist, passiert nichts weiter und das Verfahren kehrt logisch zur Längsschwingungsmessung S im Messblock 4 zurück.

Wird aber in dem ersten Prüfblock 6 erkannt, dass die Längsschwingung S den vorbestimmten Grenzwert Sₘₐₓ überschreitet, wird im Schwingungsreduzierungsblock 8 eine Schwingungsreduzierung durchgeführt, die dort als S-Red symbolisch gekennzeichnet ist. Diese dort ausgeführte Schwingungsreduzierungsmaßnahme kann eine oder mehrere Maßnahmen betreffen. Sie kann das Einfrieren des Ptichwinkels betreffen, das Wechseln des Pitchregelalgorithmus, das Verstellen der Azimutposition, das Umschalten des Betriebs der ersten Windenergieanlage von einem ersten auf einen zweiten Betriebsmodus und/oder eine Abstimmung der Drehzahlen zweier benachbarter Windenergieanlagen.

Nachdem wenigstens eine dieser Schwingungsreduzierungsmaßnahmen durchgeführt oder eingeleitet wurde, wird in dem Halteblock 10, der auch als Warteblock bezeichnet werden kann, eine vorbestimmte Wartezeit T abgewartet. Danach wird in dem zweiten Prüfblock 12, der auch als Normalisierungsprüfblock 12 bezeichnet werden kann, überprüft, ob die erfasst Längsschwingung S nun unter dem vorbestimmten Grenzwert Sₘₐₓ liegt. Hier kann auch statt des vorbestimmten Grenzwertes Sₘₐₓ, der auch dem ersten Prüfblock 6 zugrunde liegt, ein anderer, kleinerer Wert verwendet werden, z.B. eine Normalisierungsgrenze S_{N}. Zwar zeigt das Ablaufdiagramm 2 einen Messblock 4, der am Anfang des geschilderten Ablaufs steht, gleichwohl wird die Schwingungsamplitude aber ständig erfasst und somit auch weiter erfasst, auch während der Wartezeit gemäß dem symbolisch dargestellten Warteblock 10. Bei der Überprüfung im zweiten Prüfblock 12 liegt somit ein aktueller Wert der Längsschwingung S vor. Dies ist durch die gestrichelte Linie mit Pfeil von dem Messblock 4 zum zweiten Prüfblock 12 hin veranschaulicht.

Stellt der zweite Prüfblock 12 nun fest, dass die Längsschwingung S nicht unter die Noramlisierungsgrenze S_{N} mit ihrer Amplitude gesunken ist, wird die Schwingungsreduzierungsmaßnahme gemäß Block 8 zunächst einmal beibehalten. Entsprechend kehrt der Ablauf dann von dem zweiten Prüfblock 12 zu dem Schwingungsreduzierungsblock 8 zurück.

Ist aber die Schwingungsamplitude kleiner als der Normalisierungsgrenzwert S_{N}, so setzt der Ablauf mit dem Normalisierungsblock 14 fort. Der Normalisierungsblock 14, der zur Veranschaulichung mit Norm gekennzeichnet ist, beendet dann die in dem Schwingungsreduzierungsblock 8 eingeleitete Maßnahme bzw. die dort eingeleiteten Maßnahmen. Der Ablauf kehrt an seinen Anfang zurück, der durch den Messblock 4 symbolisiert ist.

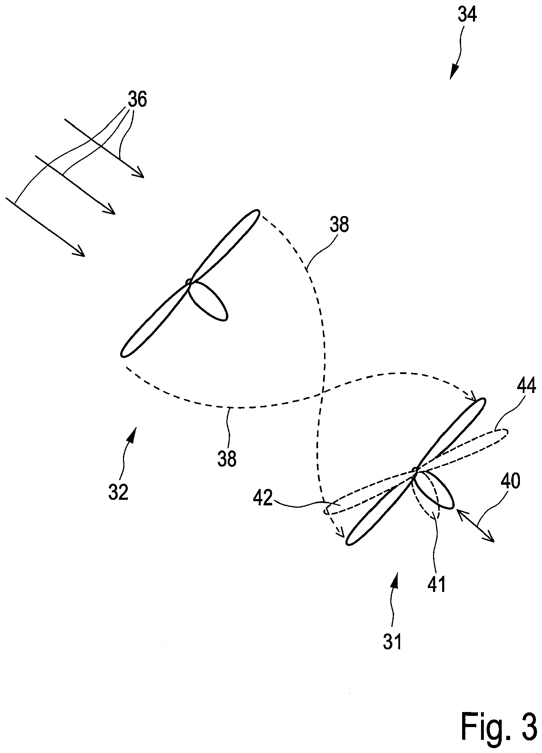

Fig. 3 zeigt schematisch in einer Draufsicht eine erste Windenergieanlage 31 und eine zweite Windenergieanlage 32. Insoweit können diese beiden Windenergieanlagen einen Windpark 34 bilden bzw. zumindest zwei von vielen Windenergieanlagen eines Windparks 34 bilden.

Fig. 3 zeigt eine sehr konkrete Situation, bei der der Wind 36 bzw. die Windrichtung 36 so auf die zweite Windenergieanlage 32 gerichtet ist, dass aus dieser Windrichtung 36 aus gesehen die erste Windenergieanlage 31 genau hinter der zweiten Windenergieanlage 32 betrieben wird.

Zur Veranschaulichung und rein schematisch sind gestrichelt zwei Schraubenlinien 38 angedeutet, die illustrieren sollen, wie der auf die zweite Windenergieanlage 32 auftreffende Wind 36 durch diese zweite Windenergieanlage 32 verändert wird und seinen weiteren Lauf zur ersten Windenergieanlage 31 nimmt. Tatsächlich werden hierbei auch sehr viele Verwirbelungen auftreten und die Schraubenlinien 38 sollen im Wesentlichen veranschaulichen, dass die erste Windenergieanlage 31 nicht alleine im Windschatten der zweiten Windenergieanlage 32 ist, sondern auch dass die Qualität bzw. Art der Windströmung durch die zweite Windenergieanlage 32 verändert wird und entsprechend verändert die erste Windenergieanlage 31 erreicht.

Hierdurch können Schwingungen an der ersten Windenergieanlage 31 ausgelöst oder verstärkt werden. Eine Längsschwingung 40 ist durch einen Doppelpfeil bei der ersten Windenergieanlage 31 verdeutlicht.

Die erste Windenergieanlage 31 ist in Fig. 3 zusätzlich gestrichelt als verdrehte erste Windenergieanlage 41 eingezeichnet. Auch diese Verdrehung, nämlich Verdrehung oder Verstellung in der Azimutposition oder Azimutausrichtung, dient nur der Veranschaulichung. Der tatsächlich gezeigte Winkel ist vergleichsweise groß und wird in der praktischen Ausführung meist kleiner eingestellt werden. Mit der gestrichelt eingezeichneten verdrehten Windenergieanlage 41 soll insbesondere unter Berücksichtigung der veranschaulicht eingezeichneten Schraubenlinien 38 verdeutlicht werden, dass der durch die zweite Windenergieanlage 32 veränderte Wind die in der Azimutposition geänderte Windenergieanlage 41 gänzlich anders erreicht. Insbesondere erreichen etwaige Verwirbelungen die Windenergieanlage zu unterschiedlichen Zeiten. Das soll dadurch veranschaulicht werden, dass die eine Schraubenlinie ein erstes gestrichelt gezeichnetes Rotorblatt 42 nun eher erreicht, wohingegen das zweite gestrichelt dargestellte Rotorblatt 44 später durch den veränderten Wind erreicht wird, was durch den Abstand zu der entsprechenden Schraubenlinie 38 verdeutlicht werden soll. Rein vorsorglich wird darauf hingewiesen, dass Fig. 3 nur zwei Rotorblätter jeweils für jede der ersten und zweiten Windenergieanlage 31 und 32 zeigt, wobei aber gemäß einer bevorzugten Ausführungsform die Windenergieanlage drei Rotorblätter aufweist, wie es auch Fig. 1 zeigt.

Es wird somit erfindungsgemäß eine Maßnahme zum Reduzieren, Vermeiden oder Unterbrechen oder Beenden einer übergroßen Längsschwingung einer Windenergieanlage vorgeschlagen, die im Wesentlichen auf dem Lösungsansatz beruht, eine kurzzeitige Veränderung des Betriebsverhaltens der Windenergieanlage vorzuschlagen, wobei nach erfolgreicher Beendigung einer solchen Maßnahme die betreffende Windenergieanlage wieder in ihren vorherigen Betriebsmodus zurückkehren kann bzw. normal weiterbetrieben wird. Hierbei können Grenzwerte der Längsschwingung zugrunde gelegt werden, die beispielsweise im Bereich von 400 bis 500 mm Schwingungsweg des Turmkopfes eines Stahlturms liegen können und etwa im Bereich von 40 bis 50 mm Schwingungsweg am Turmkopf eines Betonturms liegen können Ein spezielles Problem wurde erkannt, wenn Anlagen genau hintereinander stehen, bezogen auf den vorherrschenden Wind. Eine Möglichkeit besteht auch darin, die Erregung eines verwendeten Synchrongenerators der Windenergieanlage zu erhöhen. Dies kann durch eine Erhöhung des Erregerstroms erfolgen oder auch durch Einspeisen eines Blindleistungsanteils in den Generator, da auch dies den Effekt einer Erregungserhöhung haben kann.

## Patentansprüche

1. Verfahren zum Betreiben wenigstens einer in einem Windpark (34) bezogen auf die aktuelle Windrichtung hinter einer zweiten Windenergieanlage (32) angeordneten ersten Windenergieanlage (31) umfassend die Schritte:
- Erfassen einer Turmschwingung,
- Einleiten einer Maßnahme zur Schwingungsreduzierung, wenn die erfasste Turmschwingung eine Längsschwingung (40) ist oder enthält, und die Amplitude der Längsschwingung (40) einen vorbestimmten Grenzwert überschreitet, und
die Maßnahme zur Schwingungsreduzierung umfasst
dass die Drehzahl der ersten Windenergieanlage (31) auf die Drehzahl der zweiten Windenergieanlage (32) so abgestimmt wird, dass die Drehzahl der ersten Windenergieanlage (31) wenigstens um eine vorbestimmte Differenzdrehzahl von der Drehzahl der zweiten Windenergieanlage (32) abweicht,
**dadurch gekennzeichnet, dass** die vorbestimmte Differenzdrehzahl wenigstens 0,2U/min, vorzugsweise wenigstens 0,5U/min beträgt.

2. Verfahren nach Anspruch 1,
**dadurch gekennzeichnet, dass** die Maßnahme zur Schwingungsreduzierung außerdem umfasst
- Wechseln des verwendeten Pitch-Regelalgorithmus, insbesondere so, dass die Regelgeschwindigkeit reduziert wird.

3. Verfahren nach Anspruch 1,
**dadurch gekennzeichnet, dass** die Maßnahme zur Schwingungsreduzierung außerdem umfasst
- Verstellen der Azimutposition um einen vorbestimmten Azimutwinkel.

4. Verfahren nach Anspruch 1,
**dadurch gekennzeichnet, dass** die Maßnahme zur Schwingungsreduzierung außerdem umfasst
- Umschalten des Betriebs der ersten Windenergieanlage (31) von einem ersten auf einer ersten Leistungskennlinie basierenden Betriebsmodus, auf einen zweiten, auf einer zweiten Leistungskennlinie basierenden Betriebsmodus.

5. Verfahren nach Anspruch 1,
**dadurch gekennzeichnet, dass** die Maßnahme zur Schwingungsreduzierung außerdem umfasst
- Einfrieren des aktuellen Pitchwinkels auf den aktuellen Wert für einen vorbestimmten Einfrierzeitraum.

6. Verfahren nach Anspruch 5,
**dadurch gekennzeichnet, dass** der vorbestimmte Einfrierzeitraum im Bereich von 5s bis 1 Minute, insbesondere im Bereich von 10s bis 20s liegt.

7. Verfahren nach Anspruch 3,
**dadurch gekennzeichnet, dass** der vorbestimmte Azimutwinkel im Bereich von 2° bis 8° liegt, insbesondere im Bereich von 4° bis 5° liegt.

8. Verfahren nach einem der vorstehenden Ansprüche,
**dadurch gekennzeichnet, dass** die wenigstens eine erste Windenergieanlage (31) pitchgeregelt ist und/oder drehzahlvariabel ist.

9. Verfahren nach Anspruch 4,
**dadurch gekennzeichnet, dass** die erste und zweite Leistungskennlinie jeweils eine vorgesehene Abgabeleistung in Abhängigkeit einer Drehzahl angeben und die Leistungswerte der zweiten Leistungskennlinie bei jeweils gleichen Drehzahlwerten geringer sind als die Leistungswerte der ersten Leistungskennlinie.

10. Verfahren nach Anspruch 4 oder 9,
**dadurch gekennzeichnet, dass** beim Umschalten des Betriebs der ersten Windenergieanlage (31) vom ersten Betriebsmodus auf den zweiten Betriebsmodus die zweite Windenergieanlage (32) nicht ihren Betriebsmodus wechselt, insbesondere dass die erste Leistungskennlinie der ersten Windenergieanlage (31) einer nominellen Leistungskennlinie und/oder einer optimalen Leistungskennlinie entspricht und die zweite Windenergieanlage (32) in einem Betriebsmodus mit nomineller und/oder optimaler Leistungskennlinie betrieben wird.

11. Verfahren nach einem der Ansprüche 3, 5, 6 oder 7,
**dadurch gekennzeichnet, dass**
- das Einfrieren des aktuellen Pitchwinkels und/oder das Wechseln des verwendeten Pitch-Regelalgorithmus im Vollastbetrieb durchgeführt wird, nämlich wenn die vorherrschende Windgeschwindigkeit Nennwindgeschwindigkeit beträgt oder darüber liegt, und/oder
- das Verstellen der Azimutposition, das Umschalten des Betriebs der ersten Windenergieanlage (31) und/oder das Ändern der Drehzahl der ersten Windenergieanlage (31) im Teillastbetrieb durchgeführt wird, nämlich wenn die vorherrschende Windgeschwindigkeit unterhalb Nennwindgeschwindigkeit liegt.

12. Verfahren nach einem der Ansprüche 4, 9 oder 10,
**dadurch gekennzeichnet, dass** die zweite Leistungskennlinie im Bereich eines Übergangs von Teillastbereich zu Volllastbereich verschoben wird.

13. Windpark mit wenigstens einer ersten Windenergieanlage (31) und einer zweiten Windenergieanlage (32) zum Erzeugen elektrischer Energie aus Wind,
**dadurch gekennzeichnet, dass** die erste Windenergieanlage (31) mit einem Verfahren nach einem der vorstehenden Ansprüche betrieben wird.

14. Windpark nach Anspruch 13,
**dadurch gekennzeichnet, dass** die erste Windenergieanlage (31) einen mit Gleichstrom erregten Synchrongenerator verwendet und der Erregerstrom der ersten Windenergieanlage (31) um einen vorbestimmten Wert verändert wird, vorzugsweise um 2-8% erhöht oder verringert wird, insbesondere um 4-5% erhöht oder verringert wird.

## Claims

1. Method for operating at least one first wind turbine (31) arranged, with regard to the current wind direction, in a wind park (34) behind a second wind turbine (32), including the steps of:
- detecting a tower oscillation,
- initiating a measure to reduce oscillation if the tower oscillation is or contains a longitudinal oscillation (40), and if the amplitude of the longitudinal oscillation (40) exceeds a predefined threshold value, and
the measure for reducing the oscillation comprises
- that the rotational speed of the first wind turbine (31) to the rotational speed of the second wind turbine (32) is synchronized in such a way that the rotational speed of the first wind turbine (31) differs from the rotational speed of the second wind turbine (32) by at least a predefined differential rotational speed,
**characterized in that** the predefined differential rotational speed is at least 0,2 rpm, preferably at least 0,5 rpm.

2. Method according to claim 1,
**characterized in that** the measure for reducing the oscillation further comprises
- switching the pitch control algorithm used, in particular in such a way that the control speed is reduced.

3. Method according to claim 1,
**characterized in that** the measure for reducing the oscillation further comprises
- adjusting the yaw position by a predefined yaw angle.

4. Method according to claim 1,
**characterized in that** the measure for reducing the oscillation further comprises
- switching the operation of the first wind turbine (31) from a first operating mode based on a first power curve to a second operating mode based on a second power curve.

5. Method according to claim 1,
**characterized in that** the measure for reducing the oscillation further comprises
- freezing the current pitch angle at the current value for a predefined freezing period.

6. Method according to claim 5,
**characterized in that** the predefined freezing period falls in the range between 5 s and 1 minute, in particular in the range between 10 s to 20 s.

7. Method according to claim 3,
**characterized in that** the predefined yaw angle is in the range between 2° and 8°, in particular in the range between 4° and 5°.

8. Method according to one of the above claims,
**characterized in that** at least one first wind turbine (31) is pitch controlled and/or has a variable rotational speed.

9. Method according to claim 4,
**characterized in that** the first and the second power curves respectively provide a specified output power depending on a rotational speed, and that, with respectively the same rotational speed values, the power values of the second power curve are lower than the power values of the first power curve.

10. Method according to claim 4 or 9,
**characterized in that** when the operation of the first wind turbine (31) is switched from a first operating mode to a second operating mode, the operating mode of the second wind turbine (32) is not changed, and, in particular, **in that** the first power curve of the first wind turbine (31) corresponds to a nominal power curve and/or an optimum power curve and the second wind turbine (32) is operated in an operating mode with a nominal and/or optimum power curve.

11. Method according to one of claims 3, 5, 6 or 7,
**characterized in that**
- freezing the pitch angle and/or switching the pitch control algorithm used is performed in full-load operation, i.e. when the prevailing wind speed corresponds to or exceeds the nominal wind speed, and/or
- adjusting the yaw position, switching the operation of the first wind turbine (31) and/or changing the rotational speed of the first wind turbine (31) is performed in partial-load operation, i.e. when the prevailing wind speed is below the nominal wind speed.

12. Method according to one of claims 4, 9 or 10,
**characterized in that** the second power curve is shifted in the area of a transition between partial-load operation and full-load operation.

13. Wind farm with at least a first wind turbine (31) and a second wind turbine (32) for generating electrical energy from wind,
**characterized in that** the first wind turbine (31) is operated by means of a method according to one of the above claims.

14. Wind farm according to claim 13,
**characterized in that** the first wind turbine (31) uses a synchronous generator excited by a direct current and that the excitation current of the first wind turbine (31) is changed by a predefined value, preferably increased or reduced by 2-8%, in particular increased or reduced by 4-5%.

## Revendications

1. Procédé pour faire fonctionner au moins une première éolienne (31) disposée, dans un parc éolien (34), derrière une deuxième éolienne (32) par rapport à la direction réelle du vent, comprenant les étapes :
- de détection d'une oscillation du mât,
- d'amorçage d'une mesure pour réduire l'oscillation quand l'oscillation du mât détectée est ou contient une oscillation longitudinale (40) et que l'amplitude de l'oscillation longitudinale (40) dépasse une valeur limite prédéfinie, et
la mesure pour réduire l'oscillation comprenant
que la vitesse de rotation de la première éolienne (31) est accordée sur la vitesse de rotation de la deuxième éolienne (32) de telle sorte que la vitesse de rotation de la première éolienne (31) s'écarte de la vitesse de rotation de la deuxième éolienne (32) d'au moins une vitesse de rotation différentielle prédéfinie,
**caractérisé en ce que** la vitesse de rotation différentielle prédéfinie est d'au moins 0,2 t/min, de préférence d'au moins 0,5 t/min.

2. Procédé selon la revendication 1,
**caractérisé en ce que** la mesure pour réduire l'oscillation comprend par ailleurs
- le changement de l'algorithme de réglage de l'angle de calage utilisé, en particulier de telle sorte que la vitesse de régulation est réduite.

3. Procédé selon la revendication 1,
**caractérisé en ce que** la mesure pour réduire l'oscillation comprend par ailleurs
- l'ajustement de la position azimutale d'un angle azimutal prédéfini.

4. Procédé selon la revendication 1,
**caractérisé en ce que** la mesure pour réduire l'oscillation comprend par ailleurs
- la commutation du fonctionnement de la première éolienne (31) depuis un premier mode de fonctionnement basé sur une première courbe caractéristique de puissance sur un deuxième mode de fonctionnement basé sur une deuxième courbe caractéristique de puissance.

5. Procédé selon la revendication 1,
**caractérisé en ce que** la mesure pour réduire l'oscillation comprend par ailleurs
- la fixation de l'angle de calage en cours sur la valeur en cours pour une période de fixation prédéfinie.

6. Procédé selon la revendication 5,
**caractérisé en ce que** la période de fixation prédéfinie se situe dans la plage de 5 s à 1 minute, en particulier dans la plage de 10 s à 20 s.

7. Procédé selon la revendication 3,
**caractérisé en ce que** l'angle azimutal prédéfini se situe dans la plage de 2° à 8°, en particulier dans la plage de 4° à 5°.

8. Procédé selon l'une quelconque des revendications précédentes,
**caractérisé en ce que** l'au moins une première éolienne (31) est réglée en fonction de l'angle de calage et/ou présente une vitesse de rotation variable.

9. Procédé selon la revendication 4,
**caractérisé en ce que** la première et la deuxième courbe caractéristique de puissance indiquent respectivement une puissance de distribution prévue en fonction d'une vitesse de rotation et les valeurs de puissance de la deuxième courbe caractéristique de puissance sont, pour des valeurs respectivement identiques de vitesse de rotation, inférieures aux valeurs de puissance de la première courbe caractéristique de puissance.

10. Procédé selon la revendication 4 ou 9,
**caractérisé en ce que** lors de la commutation du fonctionnement de la première éolienne (31) du premier mode de fonctionnement sur le deuxième mode de fonctionnement, la deuxième éolienne (32) ne change pas son mode de fonctionnement, en particulier que la première courbe caractéristique de puissance de la première éolienne (31) correspond à une courbe caractéristique de puissance nominale et/ou à une courbe caractéristique de puissance optimale et la deuxième éolienne (32) fonctionne dans un mode de fonctionnement avec une courbe caractéristique de puissance nominale et/ou optimale.

11. Procédé selon l'une quelconque des revendications 3, 5, 6 ou 7,
**caractérisé en ce que**
- la fixation de l'angle de calage en cours et/ou le changement de l'algorithme de réglage de l'angle de calage utilisé sont effectués lors du fonctionnement à plein régime, à savoir quand la vitesse du vent prédominant est la vitesse du vent nominale ou est supérieure à celle-ci, et/ou
- l'ajustement de la position azimutale, la commutation du fonctionnement de la première éolienne (31) et/ou la modification de la vitesse de rotation de la première éolienne (31) sont effectués lors du fonctionnement en régime partiel, à savoir quand la vitesse du vent prédominant est inférieure à la vitesse du vent nominale.

12. Procédé selon l'une quelconque des revendications 4, 9 ou 10,
**caractérisé en ce que** la deuxième courbe caractéristique de puissance est décalée dans la plage d'une transition depuis la plage du régime partiel dans la plage du plein régime.

13. Parc éolien avec au moins une première éolienne (31) et une deuxième éolienne (32) pour produire de l'énergie électrique à partir du vent,
**caractérisé en ce que** la première éolienne (31) fonctionne avec un procédé selon l'une quelconque des revendications précédentes.

14. Parc éolien selon la revendication 13,
**caractérisé en ce que** la première éolienne (31) utilise un générateur synchrone excité par un courant continu, et le courant d'excitation de la première éolienne (31) est modifié d'une valeur prédéfinie, de préférence est augmenté ou est réduit de 2 - 8 %, en particulier est augmenté ou réduit de 4 - 5 %.
